# EUROPÄISCHE PATENTSCHRIFT

(11) **EP 1 676 044 B1**
(45) Veröffentlichungstag und Bekanntmachung des Hinweises auf die Patenterteilung: **26.03.2008**
(21) Anmeldenummer: 04817147.4
(22) Anmeldetag: 14.10.2004
(51) Int. Cl.: F16D 65/097

(54) **TEILBELAGSCHEIBENBREMSE MIT EINER FEDERANORDNUNG**
PARTIALLY LINED DISC BRAKE COMPRISING A SPRING ARRANGEMENT
FREIN A DISQUE A GARNITURE PARTIELLE DOTE D'UN ENSEMBLE RESSORT

(30) Priorität: 14.10.2003 DE 10348467
(43) Veröffentlichungstag der Anmeldung: 05.07.2006
(73) Patentinhaber: Continental Teves AG & Co. oHG, 60488 Frankfurt am Main (DE)
(72) Erfinder: WEILER, Rolf, 65817 Eppstein (DE); HEIDERICH, Stephan, 64572 Büttelborn (DE); BUNGERT, Hans, 65366 Geisenheim (DE); MEHNER, Götz, 64285 Darmstadt (DE); SANDER, Christoph, 60594 Frankfurt am Main (DE)
(86) Internationale Anmeldenummer: PCT/EP2004/052538
(87) Internationale Veröffentlichungsnummer: WO 2005/036010

(56) Entgegenhaltungen:
- EP-A- 1 227 260
- DE-A1- 19 626 302
- GB-A- 2 147 673
- US-A- 4 428 463
- US-B1- 6 179 095

## Beschreibung

Die Erfindung betrifft eine Teilbelagscheibenbremse mit einer Federanordnung zur aktiven Einstellung eines Lüftspieles zwischen einem Bremsbelag und einer Bremsscheibe. Eine derartige Federanordnung gewährleistet, dass nach Beendigung einer Bremsbetätigung die Bremsbeläge ausreichend von der Bremsscheibe abgehoben werden.

Aus der DE 101 16 598 A1 ist eine Teilbelagscheibenbremse mit einer Federanordnung zur Lüftspieleinstellung zwischen Bremsbelag und Bremsscheibe bekannt. Die Teilbelagscheibenbremse umfasst einen Bremssattel sowie zumindest eine Betätigungsvorrichtung zur Beaufschlagung der Bremsbeläge mit einer Bremsenzuspannkraft. Die Federanordnung umfasst genau eine Lüftspielfeder, die sich einerseits am Bremssattel und zum anderen an einem an einer Betätigungsvorrichtung angeordneten Bremsbelag abstützt. Die Lüftspielfeder erstreckt sich im wesentlichen in der Symmetrieebene des Bremssattels und ist damit hauptsächlich für Bremssattelausführungen mit mehreren Betätigungsvorrichtungen geeignet. Auf eine Bremssattelausführung mit nur einer Betätigungsvorrichtung lässt sich eine solche Federanordnung nicht ohne Weiteres übertragen. Darüber hinaus erfordert eine derartige Lösung eine relativ umständliche Montage der Lüftspielfeder.

Ausgehend davon ist es die Aufgabe der Erfindung eine Teilbelagscheibenbremse mit Federanordnung zur Lüftspieleinstellung anzugeben, die die aus dem Stand der Technik bekannten Nachteile überwindet und insbesondere auch bei Bremssattelausführungen mit nur einer Betätigungsvorrichtung die gewünschte Lüftspieleinstellung ermöglicht.

Gelöst wird die Aufgabe durch eine erfindungsgemäße Teilbelagscheibenbremse mit einem eine Bremsscheibe übergreifenden Bremssattel, mit wenigstens einem verschiebbar gegenüber dem Bremssattel angeordneten Bremsbelag, zum tribologischen Zusammenwirken mit der Bremsscheibe bei einer Bremsbetätigung, mit zumindest einer im Bremssattel angeordneten Betätigungsvorrichtung zur Beaufschlagung des Bremsbelages mit einer Betätigungskraft und mit einer Federanordnung zur Einstellung eines Lüftspiels zwischen Bremsbelag und Bremsscheibe nach einer Bremsbetätigung, wobei die Federanordnung lösbar in der Teilbelagscheibenbremse befestigt ist. Die Federanordnung umfasst ein Federelement, das sich bezogen auf die Achse der Bremsscheibe zumindest radial sowie axial am Bremssattel abstützt, und darüber hinaus einen mit dem Federelement verbundenen Federbügel umfasst, der mit zwei Federarmen lösbar am Bremsbelag befestigt ist. Die Federarme stützen sich dabei derart am Bremsbelag ab, dass sie in ihrer Funktion nicht durch die Position der Betätigungsvorrichtung beeinträchtigt werden. Damit eignet sich die Federanordnung vor allem auch für Teilbelagscheibenbremsen mit nur einer Bremsbetätigungsvorrichtung. Grundsätzlich ist aber auch eine Verwendung der Federanordnung in Teilbelagscheibenbremsen mit mehreren Betätigungsvorrichtungen denkbar. Die Federanordnung stützt sich dabei an demjenigen Bremsbelag ab, der unmittelbar mit der Betätigungsvorrichtung zusammenwirkt. Im einzelnen wird der Bremsbelag durch die Kraft der Federarme nach einer Bremsbetätigung von der Bremsscheibe weggedrückt, so dass sich ein ausreichendes Lüftspiel einstellen kann. Insgesamt ist ein Einsatz der Federanordnung zur Lüftspieleinstellung sowohl bei Schwimm- als auch bei Festsattelbremsen möglich.

Gemäß einer vorteilhaften Ausführung der Teilbelagscheibenbremse mit Federanordnung ist vorgesehen, dass die Federanordnung bezogen auf eine radial sich erstreckende Mittenebene des Bremssattels im wesentlichen spiegelsymmetrisch ausgebildet ist. Dadurch

wird der Bremsbelag über die Federarme mit einer gleichmäßigen Federkraft zur Lüftspieleinstellung beaufschlagt, so dass eine unerwünschte Bremsbelagschiefstellung unterbleibt.

Eine weitere sinnvolle Variante der Teilbelagscheibenbremse mit Federanordnung entsteht dadurch, dass der Federbügel mit seinen Federarmen jeweils drehbar an einem Bremsbelag eingehakt ist, der an zumindest eine Betätigungsvorrichtung gekoppelt ist. Damit ist der Federbügel schwenkbar gegenüber dem Bremsbelag angeordnet, was die Montierbarkeit der Federanordnung erleichtert. Insbesondere ist der Federbügel mit jedem Federarm jeweils in ein Aufnahmeelement eingehakt, das am Bremsbelag befestigt ist. Ein solches Aufnahmeelement ist beispielsweise als hakenförmiges Blechbauteil gestaltet, das seinerseits am Bremsbelag befestigt ist. Damit kann die Federanordnung flexibel bei unterschiedlichen Teilbelagscheibenbremsen bzw. zugehörigen Bremsbelägen zum Einsatz kommen.

Grundsätzlich kann die Federanordnung je nach Anwendungsfall spezifisch gestaltet werden. Beispielsweise bietet es sich aus Kostengründen an, den Federbügel und das Federelement einteilig aus Federdraht auszuführen. Gemäß einer anderen Variante sind der Federbügel und das Federelement als separate Bauteile ausgeführt. Dies eröffnet die Möglichkeit den Federbügel sowie das Federelement getrennt von einander zielgerichtet auszulegen und zu gestalten. Insbesondere kann man den Federbügel aus einfachem Federdraht und das Federelement aus Blech fertigen.

Des Weiteren umfasst die Erfindung gemäß Patentanspruch 7 einen Bremsbelag mit einer Federanordnung.

Erfindungsgemäß weist die Federanordnung ein Federelement auf, das sich zumindest radial sowie axial am Bremssattel abstützt, und umfasst einen mit dem Federelement verbundenen Federbügel, der mit zwei Federarmen lösbar am Bremsbelag befestigt ist.

Weitere sinnvolle Detailmerkmale der Erfindung sind den Ausführungsbeispielen in den Figuren zu entnehmen, die im folgenden näher erläutert werden.

Es zeigt:
- Fig. 1: Eine Schwimmsattelscheibenbremse mit einer ersten Variante einer Federanordnung zur Lüftspieleinstellung in teilweise geschnittener, räumlicher Ansicht;
- Fig. 2: einen Bremsbelag mit Federanordnung nach Figur 1;
- Fig. 3: eine Schwimmsattelscheibenbremse mit einer zweiten Variante einer Federanordnung in teilweise geschnittener, räumlicher Ansicht;
- Fig. 4: einen Bremsbelag mit Federanordnung nach Figur 3.

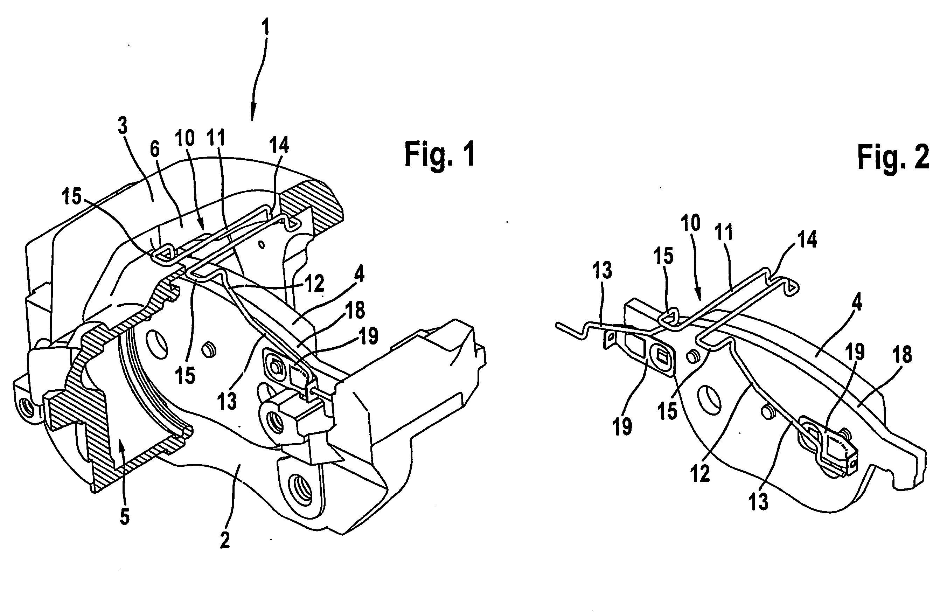

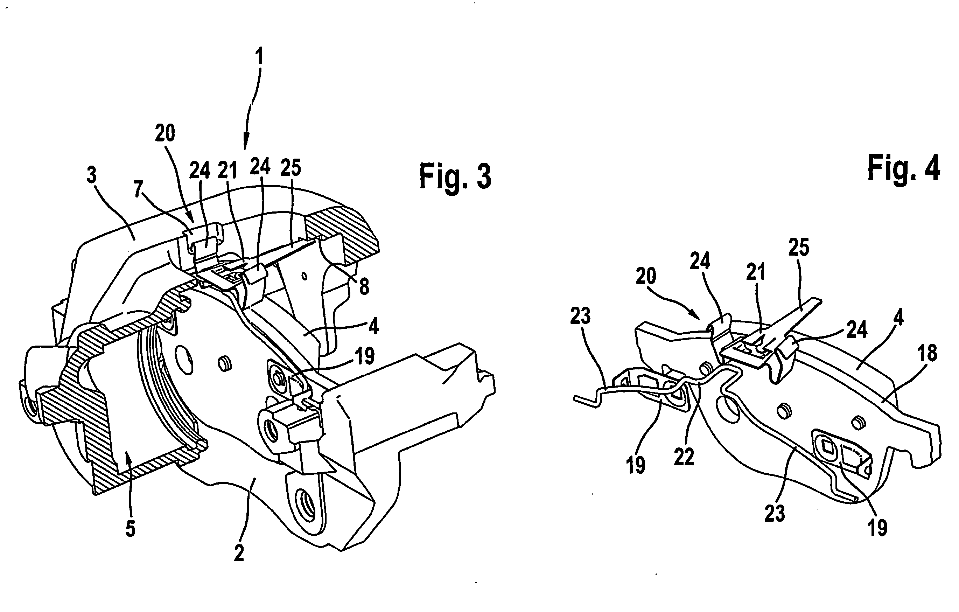

Die in den Figuren 1 und 3 gezeigte Teilbelagscheibenbremse ist jeweils als Schwimmsattelbremse 1 ausgeführt mit einem fahrzeugfesten Bremshalter 2 an dem ein Bremssattel 3 verschiebbar angeordnet ist. Der Bremssattel 3 übergreift dabei eine nicht gezeigte Bremsscheibe sowie beiderseits der Bremsscheibe angeordnete Bremsbeläge 4. Im Bremssattel 3 ist zu einer Seite der Bremsscheibe eine Betätigungsvorrichtung 5 angeordnet, die beispielsweise über einen nicht dargestellten Bremskolben mit zumindest einem Bremsbelag 4 direkt zusammenwirkt. Zur Bremsbetätigung wird der erste Bremsbelag 4 mittels der Betätigungsvorrichtung 5 direkt und der gegenüberliegende Bremsbelag infolge einer Bremssattelverschiebung indirekt in Reibeingriff mit der zugehörigen Bremsscheibe gebracht. Nach einer Bremsbetätigung sind die Bremsbeläge 4 wieder von der Bremsscheibe zu entfernen, um unerwünschte Restbremsmomente zu verhindern. Dazu ist eine Federanordnung 10, 20 vorgesehen, die einerseits am Bremssattel 3 und andererseits am Bremsbelag 4 abgestützt ist. Die Federanordnung 10, 20 ist bezogen auf eine radial ausgerichtete Mittenebene des Bremssattels 3 spiegelsymmetrisch gestaltet und erlaubt dadurch eine gleichmäßige Kraftbeaufschlagung des Bremsbelags 4. Dies verhindert ein unerwünschtes Kippen bzw. Schiefstellen des Bremsbelags 4.

Gemäß einer ersten Ausführung nach den Figuren 1-2 umfasst die Federanordnung 10 ein Federelement 11, das sich am Bremssattel 3 abstützt, sowie einen Federbügel 12, der sich mit Federarmen 13 am Bremsbelag 4 abstützt. Dabei sind das Federelement 11 und der Federbügel 12 einstückig aus einem Federdraht geformt, wodurch sich eine besonders kostengünstige Bauform ergibt. Das Federelement 11 dient im wesentlichen der Fixierung der Federanordnung 10 am Bremssattel 3 und erstreckt sich hauptsächlich innerhalb eines Fensters 6 des Bremssattels. Mit einem ersten doppelt abgewinkelten Federabschnitt 14 liegt das Federelement 11 radial innerhalb des Bremssattels 3 an und bildet gleichzeitig einen axialen Anschlag für das Federelement 11. gegenüber dem Fenster 6 im Bremssattel 3. Zwei weitere U-förmige Federabschnitte 15 liegen neben dem Fenster 6 radial außerhalb am Bremssattel 3 an. Der erste Federabschnitt 14 sorgt dabei zusammen mit den U-förmigen Federabschnitten 15 für die radiale Halterung der Federanordnung 10 am Bremssattel 3. An die U-förmigen Federabschnitte 15 schließen sich die Federarme 13 an, die sich bezogen auf die Bremsscheibenachse im wesentlichen tangential erstrecken. Mit ihrem Endabschnitt greifen die Federarme 13 jeweils unter axialer Federvorspannung am Bremsbelag 4 an, der unmittelbar mit der Betätigungsvorrichtung 5 zusammenwirkt. Im einzelnen ist jeder Federarm 13 drehbar in ein Aufnahmeelement 19 eingehakt bzw. eingefädelt, das seinerseits am Bremsbelag 4 befestigt ist. Damit ergibt sich eine schwenkbare Anordnung des Federbügels 12 am Bremsbelag 4. Grundsätzlich können die Aufnahmeelemente 19 entweder unmittelbar an den Bremsbelag 4 angeformt sein oder aber als separate Bauteile mit diesem verbunden sein. So ist es beispielsweise möglich die Aufnahmeelemente für die Federarme 13 unmittelbar an eine Trägerplatte oder aber an ein Dämpfungsblech des Bremsbelags 4 anzuformen. Innerhalb der Ausführungsbeispiele in den Figuren sind die Aufnahmeelemente 19 als Blechbauteile ausgeführt, die jeweils mit der Trägerplatte 18 des Bremsbelags 4 vernietet sind. Damit bildet die Federanordnung 10 zusammen mit dem Bremsbelag eine vormontierte Baugruppe die sich einfach am Bremssattel 3 montieren lässt.

Während einer Bremsbetätigung wird der Bremsbelag 4 axial gegenüber dem Bremssattels 3 verschoben. Aufgrund der drehbaren sowie spielbehafteten Anordnung der Federarme 13 in den Aufnahmeelementen 19 können die Federarme 13 dem axialen Verschiebeweg des Bremsbelags 3 mühelos folgen. Dabei erfolgt die Bremsbelagverschiebung gegen die axiale Vorspannkraft des Federbügels 12, die den Bremsbelag in Richtung der Betätigungsvorrichtung 5 zu drücken sucht. Insgesamt stützt sich die Federanordnung 10 mittels des doppelt abgewinkelten Federabschnitts 14 axial am Bremssattel 3 ab, um die notwendige Rückstellkraft auf den Bremsbelag 4 aufbringen zu können. Damit wirkt auch eine Rückstellkraftkomponente auf den Bremssattel 3, so dass nicht nur der an der Betätigungsvorrichtung 5 angeordnete Bremsbelag 4 sondern auch der gegenüberliegende Bremsbelag nach der Bremsbetätigung von der Bremsscheibe entfernt wird. Weiterhin werden durch die Bremsbelagverschiebung sowie die entsprechende Auslenkung der Federarme 13 die U-förmigen Federabschnitte 15 tangential bewegt. Allerdings wird die tangentiale Bewegung der U-förmigen Federabschnitte 15 durch die tangentialen Abmessungen des Fensters 6 begrenzt. Im einzelnen gewährleistet die spezielle Formgestaltung der Federanordnung 10 im üblichen Bremsbetrieb ein bestimmtes Setzverhalten, das sich über den gesamten axialen Verschiebeweg des Bremsbelags 4 in einer nahezu gleichbleibenden Rückstellkraft auswirkt. Dies ermöglich eine gleichmäßig Lüftspieleinstellung zwischen Bremsbelag 4 und Bremsscheibe unabhängig vom Betriebszustand der Teilbelagscheibenbremse.

Den Figuren 3-4 ist eine Schwimmsattelscheibenbremse 1 mit einer zweiten Variante einer Federanordnung 20 zu entnehmen. Diese entspricht in ihrer Funktion der bereits erläuterten ersten Ausführung einer Federanordnung 10 nach den Figuren 1-2 und ist ebenso spiegelsymmetrisch zur Mittenebene des Bremssattels 3 geformt. Allerdings ist die zweite Federanordnung 20 aus separaten Komponenten aufgebaut. Dies eröffnet die Möglichkeit der unabhängigen, zielgerichteten Auslegung sowie Konstruktion der einzelnen Federkomponenten. Die Federanordnung 20 umfasst ein Federelement 21, über das die Federanordnung 20 lösbar am Bremssattel 3 befestigt ist. Dazu besitzt das vorzugsweise aus Blech gefertigte Federelement 21 seitliche Federlaschen 24, mittels derer das Federelement 21 radial sowie tangential am Bremssattel 3 verrastet ist. Im einzelnen sind die Federlaschen 24 in seitlichen Aussparungen 7 des Fensters 6 verklemmt. Außerdem besitzt das Federelement 21 eine Federzunge 25, die in einer an das Fenster 6 angrenzenden Vertiefung 8 des Bremssattels 3 anliegt. Die Vertiefung 8 bildet innerhalb des Bremssattels 3 auch einen axialen Anschlag für die Federzunge 25 bzw. die gesamte Federanordnung 20. Auf diesem Wege wird die axiale Rückstellkraft der Federanordnung 20 gegenüber dem Bremssattel 3 abgestützt. Die Übertragung der Rückstellkraft zur Lüftspieleinstellung auf den Bremsbelag 3 erfolgt über einen Federbügel 22 vorzugsweise aus Federdraht. Der Federbügel 22 weist zwei im wesentlichen tangential sich erstreckende Federarme 23 auf, die ihrerseits in oben beschriebener Weise an Aufnahmeelementen 19 drehbar eingefädelt sind. Der Federbügel 22 und das Federelement 21 sind dabei miteinander verrastet. Insgesamt ist die Funktionsweise der mehrteiligen Federanordnung 20 der einteiligen Ausführung äquivalent. Die mehrteilige Variante ermöglicht jedoch die flexible Anpassung der Federanordnung 20 an die jeweiligen Rahmenbedingungen der spezifischen Teilbelagscheibenbremse.

## Patentansprüche

1. Teilbelagscheibenbremse (1) mit einem eine Bremsscheibe übergreifenden Bremssattel (3), mit wenigstens einem verschiebbar gegenüber dem Bremssattel (3) angeordneten Bremsbelag (4), zum tribologischen Zusammenwirken mit der Bremsscheibe bei einer Bremsbetätigung, mit zumindest einer im Bremssattel (3) angeordneten Betätigungsvorrichtung (5) zur Beaufschlagung des Bremsbelages (4) mit einer Betätigungskraft und mit einer Federanordnung (10, 20) zur Einstellung eines Lüftspiels zwischen Bremsbelag (4) und Bremsscheibe nach einer Bremsbetätigung, wobei die Federanordnung (10, 20) lösbar in der Teilbelagscheibenbremse (1) befestigt ist und sich an einem Bremsbelag (4) abstützt, der unmittelbar mit der Betätigungsvorrichtung (5) zusammenwirkt, **dadurch gekennzeichnet, dass** die Federanordnung (10, 20) ein Federelement (11, 21) aufweist, das sich zumindest radial sowie axial am Bremssattel (3) abstützt, und darüber hinaus einen mit dem Federelement (11, 21) verbundenen Federbügel (12, 22) umfasst, der mit zwei Federarmen (13, 23) lösbar am Bremsbelag (4) befestigt ist.

2. Teilbelagscheibenbremse nach Anspruch 1, **dadurch gekennzeichnet, dass** die Federanordnung (10, 20) bezogen auf eine Mittenebene des Bremssattels (3) im wesentlichen spiegelsymmetrisch ausgebildet ist.

3. Teilbelagscheibenbremse nach einem der vorhergehenden Ansprüche, **dadurch gekennzeichnet, dass** der Federbügel (12, 22) mit seinen Federarmen (13, 23) jeweils drehbar an einem Bremsbelag (4) aufgenommen ist, der an zumindest eine Betätigungsvorrichtung (5) gekoppelt ist.

4. Teilbelagscheibenbremse nach Anspruch 3, **dadurch gekennzeichnet, dass** der Federarm (13, 23) in ein Aufnahmeelement (19) eingehakt ist, das am Bremsbelag (4) befestigt ist.

5. Teilbelagscheibenbremse nach einem der vorhergehenden Ansprüche, **dadurch gekennzeichnet, dass** der Federbügel (22) und das Federelement (21) als separate Bauteile ausgeführt sind.

6. Teilbelagscheibenbremse nach einem der vorhergehenden Ansprüche, **dadurch gekennzeichnet, dass** das Federelement (11, 21) tangential am Bremssattel (3) abgestützt ist.

7. Bremsbelag (4) *mit einer Federanordnung (10, 20) zur Einstellung eines Lüftspiels zwischen dem Bremsbelag (4) und einer Bremsscheibe nach einer Bremsbetätigung, wobei die Federanordnung (10, 20) an einem die Bremsscheibe übergreifenden Bremssattel* (3) *einer Teilbelagscheibenbremse (1) befestigbar ist und sich an dem Bremsbelag* (4) *abstützt, der unmittelbar mit der Betätigungsvorrichtung (5) zusammenwirkt und* verschiebbar gegenüber dem Bremssattel (3) angeordnet ist, **dadurch gekennzeichnet, dass** die Federanordnung (10, 20) ein Federelement (11, 21) aufweist, das sich zumindest radial sowie axial am Bremssattel (3) abstützt, und darüber hinaus einen mit dem Federelement (11, 21) verbundenen Federbügel (12, 22) umfasst, der mit zwei Federarmen (13, 23) lösbar am Bremsbelag (4) befestigt ist.

## Claims

1. Spot-type disc brake (1) comprising a brake caliper (3) straddling a brake disc, with at least one brake lining (4) displaceably arranged in relation to the brake caliper (3) for the tribological interaction with the brake disc when the brake is applied, at least one actuating device (5) arranged in the brake caliper (3) for exerting an application force on the brake lining (4), and a spring assembly (10, 20) to adjust a clearance between the brake lining (4) and the brake disc after brake application, with the spring assembly (10, 20) being detachably fastened in the spot-type disc brake (1) and being supported on a brake lining (4) that interacts directly with the actuating device (5) (page 2, lines 21 to 23),
**characterized in that** the spring assembly (10, 20) includes a spring element (11, 21) which is at least radially and axially supported on the brake caliper (3) and, in addition, comprises a spring clip (12, 22) connected to the spring element (11, 21) and being detachably fastened at the brake lining (4) by way of two spring arms (13, 23).

2. Spot-type disc brake as claimed in claim 1,
**characterized in that** the spring assembly (10, 20) has a substantially mirror-symmetrical design with respect to a center plane of the brake caliper (3).

3. Spot-type disc brake as claimed in any one of the preceding claims,
**characterized in that** the spring clip (12, 22) with its spring arms (13, 23) is received in a rotatable fashion at a brake lining (4) which is coupled to at least one actuating device (5).

4. Spot-type disc brake as claimed in claim 3,
**characterized in that** the spring arm (13, 23) is hooked into a receiving element (19) which is attached to the brake lining (4).

5. Spot-type disc brake as claimed in any one of the preceding claims,
**characterized in that** the spring clip (22) and the spring element (21) are designed as separate components.

6. Spot-type disc brake as claimed in any one of the preceding claims,
**characterized in that** the spring element (11, 21) is supported tangentially at the brake caliper (3).

7. Brake lining (4) with a spring assembly (10, 20) for adjusting a clearance between the brake lining (4) and a brake disc after brake application, with the spring assembly (10, 20) being adapted to be fastened at a brake caliper (3) of a spot-type disc brake straddling the brake disc, and being supported on the brake lining (4) that interacts directly with the actuating device (5) and is arranged so as to be displaceable in relation to the brake caliper (3),
**characterized in that** the spring assembly (10, 20) includes a spring element (11, 21), which is supported at least radially and axially on the brake caliper (3), and in addition comprises a spring bracket (12, 22), which is connected to the spring element (11, 21) and is detachably secured at the brake lining (4) by means of two spring arms (13, 23).

## Revendications

1. Frein à disque à garniture partielle (1) avec un étrier de frein (3) passant sur un disque de frein, avec au moins une garniture de frein (4) disposée coulissante par rapport à l'étrier de frein (3), pour la coopération tribologique avec le disque de frein lors d'un actionnement du frein, avec au moins un dispositif d'actionnement (5) disposé dans l'étrier de frein (3), pour agir sur la garniture de frein (4) avec une force d'actionnement, et avec un agencement de ressort (10, 20) pour le réglage d'un jeu entre la garniture de frein (4) et le disque de frein après un actionnement du frein, l'agencement de ressort (10, 20) étant fixé de manière séparable dans le frein à disque à garniture partielle (1) et prenant appui contre une garniture de frein (4) qui coopère directement (p. 2, 1. 21 à 23) avec le dispositif d'actionnement (5), **caractérisé en ce que** l'agencement de ressort (10, 20) comporte un élément de ressort (11, 21) qui prend appui au moins radialement ainsi qu'axialement contre l'étrier de frein (3), et comprend en outre un étrier de ressort (12, 22) qui est relié à l'élément de ressort (11, 21) et qui est fixé de manière séparable sur la garniture de frein (4), par deux bras de ressort (13, 23).

2. Frein à disque à garniture partielle selon la revendication 1, **caractérisé en ce que** l'agencement de ressort (10, 20) est réalisé sensiblement dans une symétrie en miroir par rapport à un plan médian de l'étrier de frein (3).

3. Frein à disque à garniture partielle selon l'une quelconque des revendications précédentes, **caractérisé en ce que** l'étrier de ressort (12, 22) est reçu par chacun de ses bras de ressort (13, 23) de manière à pouvoir tourner sur une garniture de frein (4) qui est accouplée à au moins un dispositif d'actionnement (5).

4. Frein à disque à garniture partielle selon la revendication 3, **caractérisé en ce que** le bras de ressort (13, 23) est accroché dans un élément de réception (19) qui est fixé sur la garniture de frein (4).

5. Frein à disque à garniture partielle selon l'une des revendications précédentes, **caractérisé en ce que** l'étrier de ressort (22) et l'élément de ressort (21) sont réalisés sous la forme de composants séparés.

6. Frein à disque à garniture partielle selon l'une des revendications précédentes, **caractérisé en ce que** l'élément de ressort (11, 21) est soutenu tangentiellement sur l'étrier de frein (3).

7. Garniture de frein (4) avec un agencement de ressort (10, 20) pour le réglage d'un jeu entre la garniture de frein (4) et un disque de frein après un actionnement du frein, l'agencement de ressort (10, 20) pouvant être fixé à un étrier de frein (3), passant sur le disque de frein, d'un frein à disque à garniture partielle, et prenant appui contre la garniture de frein (4) qui coopère directement avec le dispositif d'actionnement (5)et est disposée coulissante par rapport à l'étrier de frein (3), **caractérisée en ce que** l'agencement de ressort (10, 20) comporte un élément de ressort (11, 21) qui prend appui au moins radialement ainsi qu'axialement contre l'étrier de frein (3), et comprend en outre un étrier de ressort (12, 22) qui est relié à l'élément de ressort (11, 21) et fixé de manière séparable, par deux bras de ressort (13, 23), à la garniture de frein (4).
